Europäisches Patentamt

(19) European Patent Office

Office européen des brevets

(11) Publication number: **0 010 963**
**B1**

(12) **EUROPEAN PATENT SPECIFICATION**

(45) Date of publication of patent specification: **09.03.83**　(51) Int. Cl.³: **G 01 F  11/02**

(21) Application number: **79302395.3**

(22) Date of filing: **31.10.79**

(54) Dispensing pump.

(30) Priority: **01.11.78 GB  4271778**
**30.01.79 GB  7903111**

(43) Date of publication of application:
**14.05.80 Bulletin 80/10**

(45) Publication of the grant of the patent:
**09.03.83 Bulletin 83/10**

(84) Designated Contracting States:
**AT BE CH DE FR GB IT LU NL SE**

(56) References cited:
**FR - A - 577 059**
**FR - A - 1 416 519**
**US - A - 2 009 743**
**US - A - 2 511 723**

(73) Proprietor: **STERWIN AG.**
**Zeughausgasse 9**
**CH-6300 Zug (CH)**

(72) Inventor: **Sams, Bernard**
**22, Avondale Avenue**
**London N.12 (GB)**

(74) Representative: **Westwood, Edgar Bruce et al,**
**STEVENS, HEWLETT & PERKINS 5, Quality Court**
**Chancery Lane**
**London WC2A 1HZ (GB)**

Courier Press, Leamington Spa, England

Dispensing pump.

The invention relates to a reciprocating pump for dispensing fluent substances. Typical of the fluent substances which may be dispensed are soaps and other detergent or toilet preparations, foods, medicaments and the like in the form of pastes, creams and liquids in different grades of viscosity.

US—A—2 009 743 describes such a pump of a type comprising a pumping chamber open at one end and having a side wall and an opposite end wall, a piston rod axially slidable in a guide tube and having an inner portion the diameter of which is smaller than the diameter of the guide tube, the latter tube being coaxial with the pumping chamber and opening out of the end wall, a piston mounted on the inner end of the rod, the rod and piston being movable as a unit between an inner position wherein the piston projects clear of the open end of the chamber and an outer position wherein the piston is withdrawn into and sealingly engages the side wall of the pumping chamber for pumping fluent substances from the interior of the pumping chamber through part of the guide tube to a nozzle.

In the known pump the guide tube is formed as a bore in a solid head and the outer end of the piston rod which projects out of the bore is packed with a suitable packing held in place by a gland nut screwed on a lug on the head. The seal thus formed has the characteristic common of its type of being expensive to produce and assemble, and requires frequent maintenance if it is to be kept leak proof.

A duct is formed in the solid head and extends downwardly and generally forwardly at an angle to the bore with which it communicates adjacent to the pumping chamber but spaced an appreciable distance therefrom. This duct constitutes the nozzle through which the fluent substance is dispensed.

German Patentschrift DE—C—2,104,510 describes a dispensing pump for dispensing predetermined amounts of a fluid substance and comprising a dispensing chamber open at the top and a movable piston mounted intermediate the ends of a piston rod slidable in an opening in the bottom end wall of the pumping chamber. The inner end of the piston rod is guided in a guide member which extends across the open end of the dispensing chamber and has openings therein to connect the interior of the chamber to the downwardly directed outlet of a container holding a quantity of the substance dispensed. The outer end of the piston rod is a tube having entry openings immediately below the piston. A spiral spring mounted around the inner end of the piston rod between the guide member and the side of the piston facing the container outlet urges the piston into a rest position in which the piston seals with the end wall of the dispensing chamber so that no fluent substance can escape from the chamber.

To dispense fluent substance the piston rod and piston are lifted. On this movement substance present in the dispensing chamber is pushed away upwards until the piston moves clear of the upper end of the chamber when substance then flows from the container around the piston into the dispensing chamber. When the user releases the piston rod, the spring returns the piston downwardly and when this reaches the dispensing chamber it forces the substance present therein out through the entry openings in the piston rod and out of the bottom end of the rod.

To prevent leakage in the non-actuated position the maintenance of an adequate seal between the bottom face of the piston and the end wall of the dispensing chamber is critical in this known valve. However, the annular sealing faces necessitated by the design have a relatively large surface area and consequently a low contact pressure. The maximum contact pressure obtainable is determined by the force of the spring. On the other hand a relatively weak spring must be used otherwise the force the user has to apply to operate the valve become inadmissibly large. Any misalignment of the sealing faces will also cause the valve to leak. To prevent leakage from this cause close tolerances must be observed during manufacture and assembly, thus making construction relatively expensive. In addition, the spring and guide member are constantly immersed in the fluid substance which gives rise to problems of corrosion and sticking particularly if the fluent substance tends to harden and set with age or on exposure to air. These problems can also arise in respect to the annular sealing surfaces which can become fouled and non-operative. Due to the low contact pressure the surfaces are not self-cleaning.

The invention as claimed is intended to solve the problems posed by the known pumps of providing a reliable seal which is provided by parts which are simple in design and reliable in operation can be manufactured cheaply and operate with a wiping or wedging action to clean the co-operating faces on each contact and ensure a reliable seal not subject to deterioration.

According to the invention this object is achieved by the reciprocating pump defined in claim 1.

The advantages offered by the invention include the provision of an easily assembled and reliably operating dispensing pump for fluent substances in which the likelihood of failure due to corrosion or coagulation of the fluent substance being pumped is substantially eliminated, as well as a low cost construction.

The pumping chamber may be formed adjacent its open end with means for connecting it to a container for holding a quantity of the substance to be dispensed. The container may be refillable, or may be a disposable container which is discarded when empty. A disposable container may be integrally fitted with the pump.

An embodiment of a pump according to the invention is shown by way of example in the accompanying drawings, and will now be described in more detail. In the drawings, wherein the pump is represented only diagrammatically the better to illustrate its mode of operation,

Figure 1 shows an embodiment of pump according to the invention particularly for dispensing free-flowing liquids;

Figures 2 to 5 are views similar to Figure 1 showing the pump at different stages in the operating cycle; and

Figure 6 is an exploded perspective view of the pump.

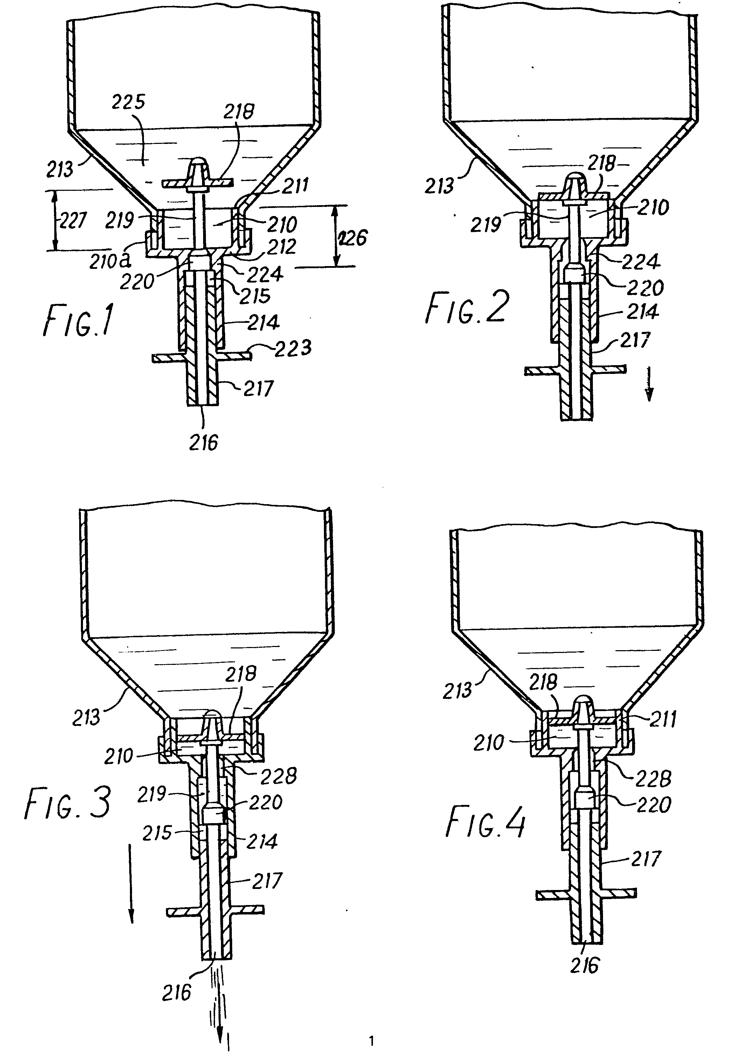

Referring to Figure 1, the dispensing pump shown comprises a pumping chamber 210 having a cylindrical side wall 211 and a bottom end wall 212. In this embodiment the chamber 210 has an external annular flange 210a which is swaged over the mouth of a blow moulded container 213 which holds a quantity of a free-flowing liquid to be dispensed. A guide tube 214 integral with the chamber 210 opens axially out of the end wall 212. A piston rod 217 is axially slidable in the guide tube 214 and a piston 218 is mounted on the inner end of the piston rod within the chamber 210. The piston rod 217 comprises three sections namely an inner end section 219, a sealing plug 220 and a tubular outer section 221 (fig. 6). Inner end section 219 is solid and has a smaller diameter than sections 220 and 221. The piston 218 may be a snap-fit on the end section 219. The plug 220 has a diameter intermediate those of the section 219 and 221. Immediately beneath the plug 220 the piston rod 217 is formed with a transverse outlet bore 215 which communicates with the interior of the hollow outer section 221 and provides a delivery nozzle 216 on the outer end of the piston rod. An O-ring seal (not shown) may be fitted around the outer section 221 of the piston rod to make a fluid-tight seal between the rod and the wall of the guide tube 214. The piston rod 217 projects downwardly beyond the lower end of the guide tube and is provided with an annular rib 223 adapted to be connected to a suitable means (not shown) for reciprocating the piston rod 217 and piston 218.

The pug 220 has a smaller diameter and thus a lesser cross-sectional area than the outer section 221 of the piston rod and is preferably tapered upwardly in a wedging shape. The guide tube 214 adjacent the end wall 212 has a section 224 of reduced internal diameter with which the plug 220 is adapted to mate and seal.

Figure 1 shows the piston and piston rod in their inner or non-operated position wherein the piston 218 projects clear of the side wall 211 of the pumping chamber so that liquid in the container 213 can flow freely into the chamber 210 through the gap 225 between the piston 218 and the side wall 211. The plug 220 is sealingly engaged with the guide tube section 224 so that the chamber 210 is effectively sealed at its bottom. The axial distance 226 between the lower edge of the section 224 of the guide tube 214 and the upper edge of the chamber side wall 211 is substantially the same as the axial distance 227 between the piston 218 and the upper end of the plug.

To perform the delivery stroke the reciprocating means (not shown) are operated to draw the piston rod 217 and piston 218 downwardly as a unit. A short while after the commencement of the delivery stroke, the piston 218 moves into sealing engagement with the side wall 211 of the pumping chamber, so trapping the liquid within the chamber. At this instant, Figure 2, the plug section 220 is just clearing the lower edge of the section 224 of the guide tube. Continuing movement of the rod and piston pumps the liquid from the interior of the pumping chamber 210 into the guide tube 214 through the passage 228, Figure 3, which is formed between the guide tube 214 and the inner end section 219 of the piston rod which is of reduced cross-sectional area, and through the outlet 215 to the nozzle 216.

If the piston is allowed to bottom on the end wall 212 of the pumping chamber, a maximum quantity of liquid is discharged. Means (not shown) may be provided for varying the length of the delivery stroke by altering the outer position within a range of outer positions for selecting the quantity of substance disposed at each pumping stroke.

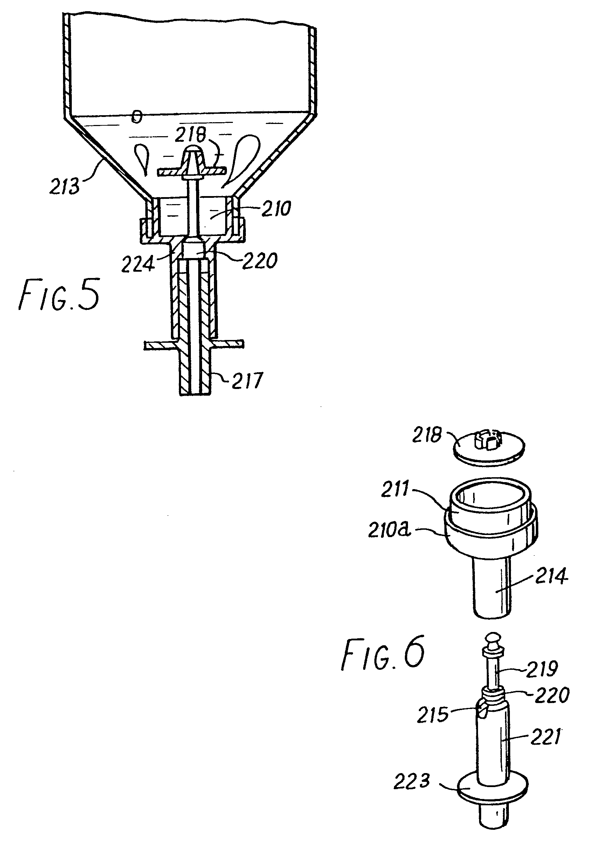

Figure 4 shows the pump after the piston 218 and rod 217 have moved a short distance through its return stroke. As the piston 218 is still sealingly engaged with the side wall 211 of the pumping chamber 210, the initial effect of the return movement is to draw back into the pumping chamber 210 and the passage 228 any substance remaining in the outlet 215 and not delivered through the nozzle 216. This means that there is both instant cut-off of delivery and positive prevention of drips. The volume of the pumping chamber 210 not occupied by liquid drawn back then fills with air drawn in through the nozzle 216. As the piston 218 clears the end of the side wall 211 shortly before it reaches its inner position, the air trapped within the chamber 210 escapes through the gap 20 into the container 225, Figure 5, and a fresh amount of liquid is drawn into the chamber 210 to be dispensed on the next delivery stroke. The chamber has been closed at the bottom by the plug 220 returning to seal with the guide tube section 224. The container 213 can therefore be completely closed and can be rigid or flexible. If rigid, only a thin wall is needed. Figure 6 shows the simple assembly of three component parts.

The drawings do not show any mechanism for reciprocating the piston rod. Suitable mechanisms will readily occur to those skilled in the art and can incorporate means for varying the stroke of the piston as mentioned above.

The entire pump as described may be manufactured very simply and cheaply by moulding in suitable plastic material. The pump essentially comprises only one moving part, namely, the unit consisting of the piston rod and the piston. The only parts in continuous contact with the fluent substance are the inner end of the piston rod, the piston and the sealing members which can readily be made of a corrosion resistant plastic, the wiping or wedging action of the sealing members ensuring the creation of a reliable seal not subject to deterioration.

In many instances it may be found that the low cost of the pump enables the pump to be fitted and solid integral which the container as a disposable dispensing pack.

## Claims

1. A reciprocating pump for dispensing fluent substances comprising a pumping chamber (210) open at one end and having a side wall (211) and an opposite end wall (212), a piston rod (217) axially slidable in a guide tube (214) and having an inner portion (219) the diameter of which is smaller than the diameter of the guide tube (214), the latter tube being coaxial with the pumping chamber (210) and opening out of the end wall (212), a piston (218) mounted on the inner end of the rod (217), the rod and piston being movable as a unit between an inner position wherein the piston projects clear of the open end of the chamber (210) and an outer position wherein the piston (218) is withdrawn into and sealingly engages the side wall (211) of the pumping chamber (210) for pumping fluent substance from the interior of the pumping chamber through part of the guide tube to a nozzle (216), characterised in that the piston rod (217) comprises a sealing portion (220) adjacent the inner portion (219) of this rod which sealing portion in the inner position sealingly engages a seat (224) formed in the guide tube (214) adjacent the end wall (212) of the chamber, the distance (226) from the open end (211) of the pumping chamber to the seat (224) being equal to the distance (227) between the piston (218) and the seal (220) on the piston rod, the outer section (221) of the piston rod below the section (220) is tubular and that in the outer position the fluent substance is pumped from the interior of the chamber through the seat (224) and the tubular outer section (221) of the piston rod to the nozzle (216), which is provided at the outer end of the tubular section (221).

2. A pump as claimed in Claim 1 in which the piston rod sealing portion (220) comprises a plug which sealingly engages a co-operating seat (224) of the guide tube (214).

3. A pump as claimed in Claim 2 in which the plug (220) is wedge-shaped.

4. A pump as claimed in Claim 2 or 3 in which the piston rod comprises a transverse bore (215) beneath the plug (220) communicating with the tubular section (221).

5. A pump as claimed in any of Claims 1 to 4 in which the pumping chamber is permanently attached to a container (213).

## Patentansprüche

1. Kolbenpumpe für die Ausgabe flüssiger Stoffe mit einer Pumpenkammer (210), die an einem Ende offen ist und eine Seitenwand (211) und eine gegenüberliegende Abschlußwand (212) aufweist, mit einer Kolbenstange (217), die in einem Führungsrohr (214) axial verschiebbar ist und einen inneren Abschnitt (219) besitzt, dessen Durchmesser kleiner als der Durchmesser des Führungsrohres (214) ist, das koaxial zur Pumpenkammer (210) angeordnet ist und in die Abschlußwand (212) einmündet, mit einem am inneren Ende der Kolbenstange (217) angeordneten Kolben (218), der gemeinsam mit der Kolbenstange als Einheit zwischen einer inneren Stellung, in der der Kolben frei aus dem offenen Ende der Pumpenkammer (210) herausragt, und einer äußeren Stellung, in der der Kolben (218) zurückgezogen ist und abgedichtet die Seitenwand (211) der Pumpenkammer (210) berührt, derart beweglich ist, daß der flüssige Stoff aus dem Innern der Pumpenkammer durch einen Teil des Führungsrohres zu einer Mündung (216) gepumpt wird, dadurch gekennzeichnet, daß die Kolbenstange (217) nahe ihrem inneren Abschnitt (219) einen Verschlußkörper (220) besitzt, der in der inneren Stellung abdichtend mit einem Ventilsitz (224) zusammenwirkt, der im Führungsrohr (214) nahe der Abschlußwand (212) der Pumpenkammer angeordnet ist, daß der Abstand (226) zwischen dem offenen Ende (211) der Pumpenkammer und dem Ventilsitz (224) gleich dem Abstand (227) zwischen dem Kolben (218) und dem Verschlußkörper (220) auf der Kolbenstange ist, daß der äußere Abschnitt (221) der Kolbenstange unterhalb des Verschlußkörpers (220) rohrförmig ausgebildet ist und daß in der äußeren Stellung der flüssige Stoff aus dem Innern der Pumpenkammer durch den Ventilsitz (224) und den rohrförmigen äußeren Abschnitt (221) der Kolbenstange zur Mündung gepumpt wird, die am äußeren Ende des rohrförmigen Abschnitts (221) angeordnet ist.

2. Kolbenpumpe nach Anspruch 1, dadurch gekennzeichnet, daß der Verschlußkörper (220) der Kolbenstange einen Stopfen aufweist, der abdichtend in einen komplementären Ventilsitz (224) des Führungsrohrs (214) eingreift.

3. Kolbenpumpe nach Anspruch 2, dadurch gekennzeichnet, daß der Stopfen (220) konisch ausgebildet ist.

4. Kolbenpumpe nach Anspruch 2 oder 3, dadurch gekennzeichnet, daß die Kolbenstange unterhalb des Stopfens (220) eine Querbohrung (215) aufweist, die mit dem rohrförmigen Abschnitt (221) kommuniziert.

5. Kolbenpumpe nach einem der Ansprüche 1 bis 4, dadurch gekennzeichnet, daß die Pumpenkammer dauerhaft mit einem Behälter (213) verbunden ist.

## Revendications

1. Pompe à va-et-vient permettant la distribution de substances fluides, comprenant une chambre de pompage (210) ouverte à une extrémité et ayant une paroi latérale (211) et une paroi terminale opposée (212), une tige de piston (217) pouvant coulisser axialement dans un tube de guidage (214) et ayant une partie intérieure (219) dont le diamètre est plus petit que le diamètre du tube de guidage (214), ce dernier tube étant coaxial à la chambre de pompage (210) et débouchant de la paroi terminale (212), un piston (218) monté sur l'extrémité intérieure de la tige (217), la tige et le piston étant mobiles en bloc entre une position intérieure dans laquelle le piston fait saillie de l'extrémité ouverte de la chambre (210) sans la toucher, et une position extérieure dans laquelle le piston (218) est retiré à l'intérieur de la chambre de pompage (210) et est en contact étanche avec la paroi latérale (211) de celle-ci, pour pomper une substance fluide de l'intérieur de la chambre de pompage, à travers une partie du tube de guidage, jusqu'à un ajutage (216), caractérisée en ce que la tige de piston (217) comprend à proximité de sa partie intérieure (219) une partie d'étanchéité (220) qui, dans la position intérieure, est en contact étanche avec un siège (224) formé dans le tube de guidage (214) à proximité de la paroi terminale (212) de la chambre, la distance (226) entre l'extrémité ouverte (211) de la chambre de pompage et le siège (224) étant égale à la distance (227) entre le piston (218) et le joint d'étanchéité (220) porté par la tige de piston, l'autre partie (221) de la tige de piston qui se trouve au-dessous de la partie (220) a une forme tubulaire, et en ce que, dans la position extérieure, la substance fluide est pompée de l'intérieur de la chambre à travers le siège (224) et la partie extérieure tubulaire (221) de la tige de piston jusqu'à l'ajutage (216), lequel est prévu à l'extrémite extérieure de la partie tubulaire (221).

2. Pompe selon la revendication 1, dans laquelle la partie d'étanchéité (220) de la tige de piston comprend un bouchon qui vient en contact étanche avec un siège coopérant (224) du tube de guidage (214).

3. Pompe selon la revendication 2, dans laquelle le bouchon (220) est en forme de coin.

4. Pompe selon revendication 2 ou 3, dans laquelle la tige de piston comprend au-dessous du bouchon (220) un alésage transversal (215) communiquant avec la partie tubulaire (221).

5. Pompe selon l'une quelconque des revendications 1 à 4, dans laquelle la chambre de pompage est fixée de manière permanente à un récipient (213).

FIG.1

FIG.2

FIG.3

FIG.4

1

FIG.5

FIG.6